Europäisches Patentamt

European Patent Office

Office européen des brevets

(11) Veröffentlichungsnummer: **0 507 201 A2**

# (12) EUROPÄISCHE PATENTANMELDUNG

(21) Anmeldenummer: 92105096.9

(22) Anmeldetag: 25.03.92

(51) Int. Cl.5: **G05D 13/34**

(30) Priorität: 30.03.91 DE 4110493

(43) Veröffentlichungstag der Anmeldung:
**07.10.92 Patentblatt 92/41**

(84) Benannte Vertragsstaaten:
**FR GB IT**

(71) Anmelder: **Elsbett, Ludwig**
**Industriestrasse 14**
**W-8543 Hilpoltstein(DE)**

(71) Anmelder: **Elsbett, Günter**
**Industriestrasse 14**
**W-8543 Hilpoltstein(DE)**
Anmelder: **Elsbett, Klaus**
**Industriestrasse 14**
**W-8543 Hilpoltstein(DE)**

(72) Erfinder: **Weigel, Konrad**
**Sulzkirchen, Hauptstrasse 33**
**W-8437 Freystadt(DE)**

(54) **Verfahren zum Regeln der Drehzahl von Kraftmaschinen.**

(57) Zum Regeln der Drehzahl von Kraftmaschinen wird vorgeschlagen, daß der Regelbereich in mindestens zwei Regelphasen mit positivem Proportionalgrad und mindestens eine Sprungphase aufgeteilt ist, wobei der Absolutbetrag des Proportionalgrades der Regelphase immer größer als der Absolutbetrag des Proportionalgrades der Sprungphase ist.

Fig 1b

Die Erfindung geht aus von einem Verfahren nach dem Oberbegriff des Hauptanspruchs.

Treibt ein Stationärmotor beispielsweise einen Stromgenerator an, so muß er sich selbständig der entnommenen Last entsprechend regeln. Das bedeutet, daß bei Leerlauf wenig Kraftstoff zugeführt und die Einspritzmenge bis zur Vollast entsprechend erhöht wird. Üblicherweise wird versucht, die Drehzahl möglichst konstant zu halten. Dies konnte bisher aber nur mit Einschränkungen erreicht werden: Bei den bekannten Reglern vermindert sich die Drehzahl im Lastbereich gegenüber der Drehzahl im Leerlaufbereich. Man spricht dabei von Reglern mit positivem Proportional- oder P-Grad.

Der P-Grad ergibt sich aus der Drehzahldifferenz zwischen Vollast und Nullast bezogen auf die Nenndrehzahl. Bei kleinem P-Grad oder P-Grad = 0 kann kein stabiles Drehzahlverhalten erreicht werden, und die Drehzahl würde sich auch bei stabiler Last ständig ändern. Nach Bosch, Technische Unterrichtung, Diesel-Einspritzausrüstung, Drehzahlregler für Reiheneinspritzpumpen, liegt der P-Grad für unterschiedliche Einsatzzwecke zwischen 2 und 15 Prozent, um das Drehzahlverhalten entsprechend zu stabilisieren.

Bei manchen Anwendungsfällen ist es aber wünschenswert, einen noch geringeren oder negativen Proportionalgrad zu erreichen. Bei Kraftmaschinen, die nur im Leerlauf und in einem relativ kleinen Vollastbereich betrieben werden, ist es vorteilhaft, daß die Drehzahl im Leerlaufbereich nicht wie bei herkömmlichen Reglern höher ist, sondern deutlich niedriger.

Ziel der Erfindung ist es, ein Verfahren zu schaffen, mit dessen Hilfe eine Drehzahlregelung mit jedem beliebigen P-Grad, der auch klein oder sogar negativ sein kann, durchführbar ist. Es soll dabei trotzdem ein stabiles Drehzahlverhalten erreicht werden. Hierdurch könnten zum Beispiel Stromgeneratoren oder auch Wasserpumpen mit weitaus höherer Regelqualität betrieben werden.

Die Aufgabe wird gelöst durch ein Verfahren mit den kennzeichnenden Merkmalen des Hauptanspruchs. Es ist dabei unerheblich, ob die Regelung auf elektrischer oder mechanischer Basis erfolgt. In den Vorrichtungsansprüchen 3 bis 10 wird eine mechanische Lösung beschrieben, auf die der Schutzumfang jedoch nicht beschränkt werden soll.

Die Regelung, bei der hier von einem Gesamtregelbereich die Rede ist, bezieht sich auf die Regelung nach der Startphase und wird in der Literatur oft als Enddrehzahlregelung (zum Beispiel Bosch, Technische Unterrichtung, Dieseleinspritzausrüstung, Drehzahlregler für Reiheneinspritzpumpen, Stuttgart 1975, Robert Bosch GmbH) bezeichnet. Bei dem erfindungsgemäßen Verfahren erfolgt die Regelung praktisch in Stufen, deren Dimensionen durch die Größe von Widerständen festgelegt werden können. Auf jeder Stufe erfolgt eine kontinuierliche Regelung, die aufgrund eines großen positiven P-Grades sehr stabil gehalten werden kann. Um zur nächsten Stufe der Regelphase zu gelangen, wird eine Sprungphase zwischengeschaltet. Da während dieser Sprungphase nicht geregelt, sondern nur von einer zur anderen Regelphase übergegangen wird, spielt in diesem Bereich die Stabilität und damit der P-Grad keine Rolle.

Es ist also bei dieser Sprungphase jeder P-Grad - auch ein negativer P-Grad - möglich. Durch diese stufenweise Regelung in verschiedenen Regelphasen läßt sich folglich jeder beliebige Gesamt-P-Grad realisieren. Die Stufen lassen sich ohne weiteres so dimensionieren, daß die Sprungphasen über eine Änderung der Drehzahl praktisch nicht meßbar sind und sich daher auch nicht störend auswirken.

Bei einer Vorrichtung, die nach dem erfindungsgemäßen Verfahren arbeitet, ist ein Fliehkraftregler vorgesehen, dessen Fliehgewichten in üblicher Weise eine Kraft entgegengesetzt ist. Erfindungsgemäß wird diese Kraft jedoch durch drei verschiedene Quellen erzeugt. Eine dieser Quellen weist zwei mögliche Kraftniveaus auf. Diese "bistabile" Kraftquelle wird von der von den Fliehgewichten ausgehenden Kraft geschaltet. Sie kann beim Vermindern der Einspritzmenge gegen die Fliehgewichte und beim Erhöhen gegen eine der anderen Kraftquellen wirken.

Bei einer zweiten Ausführungsform wird die den Fliehgewichten entgegengesetzte Kraft nur durch zwei Kraftquellen erzeugt. Eine dieser Kraftquellen wirkt nur im Leerlaufbereich, während die andere ständig wirkt. Diese ständig wirkende Kraft steigt bei einem Verschieben der Regelstange in Drosselrichtung nur im Lastbereich stärker an als die von den Fliehgewichten ausgehende Kraft. Im Nicht-Lastbereich dagegen steigt die von den Fliehgewichten ausgehende Kraft stärker an. Dadurch ergeben sich zwei stabile Regelphasen, nämlich eine Regelphase im Lastbereich bei hoher Drehzahl und eine Regelphase im Leerlaufbereich bei niedriger Drehzahl. Dies kann sich besonders vorteilhaft zum Beispiel bei Kompressoren auswirken, bei denen nur zwei Betriebszustände vorkommen. Abhängig davon, ob Last entnommen wird, schaltet der Regler auf Leerlauf- oder Vollastdrehzahl.

Weitere Vorteile und Einzelheiten der Erfindung werden nachfolgend anhand der Zeichnungen näher erläutert.

Es zeigen:
- Fig. 1: Reglerdiagramme mit positivem und negativem Gesamt-P-Grad,
- Fig. 2: den Kraftverlauf von verschiedenen Kraftquellen in unterschiedlichen Regleranordnungen,

- Fig. 3: eine erfindungsgemäße Regleranordnung,
- Fig. 4: ein zweites Ausführungsbeispiel,
- Fig. 5: ein drittes Ausführungsbeispiel,
- Fig. 6: ein Drehzahldiagramm der Regleranordnung nach Fig. 5.

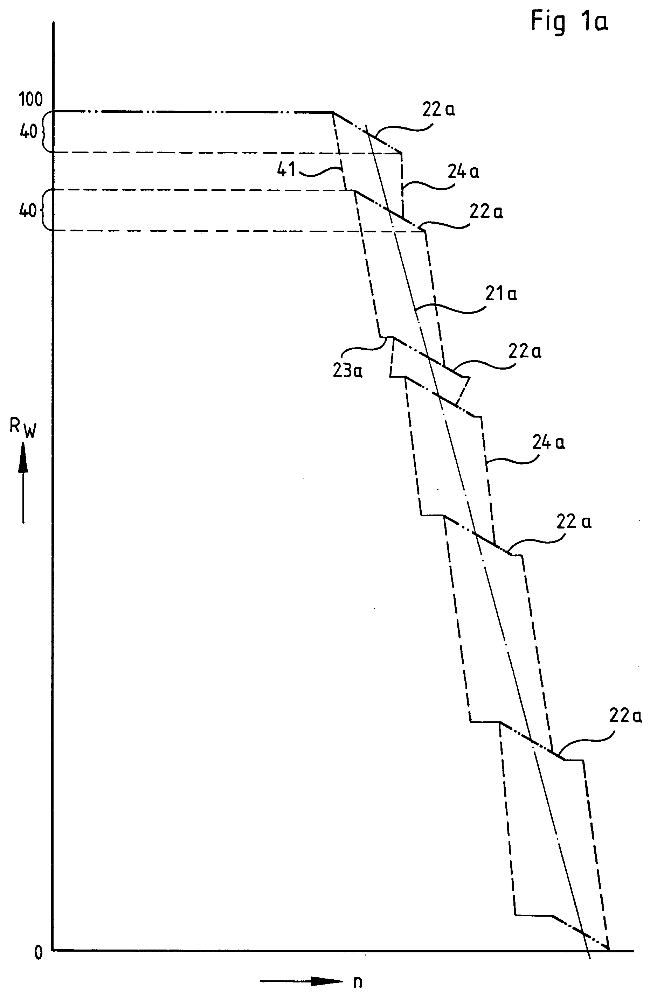

Fig. 1a zeigt die Kennlinie für einen erfindungsgemäßen Regler mit einem kleinen, aber positiven P-Grad. Der Regelbereich erstreckt sich über einen Regelstangenweg RW von 0 bis 100, wobei 100 dem Regelstangenweg bei Vollast entspricht. Läuft der Motor in etwa bei Vollast, so wird die Drehzahl im Bereich der Regelphase 22a entsprechend der Last und damit dem Regelstangenweg geregelt. Ändert sich die Last lediglich im Bereich 40, so wird die Drehzahl auf der Linie 22a nachgeregelt. Unterschreitet die Last jedoch den Bereich 40, so findet ein Sprung statt. In diesem Bereich 24a findet keine Regelung statt, die Höhe des Sprunges ist abhängig von der Laständerung.

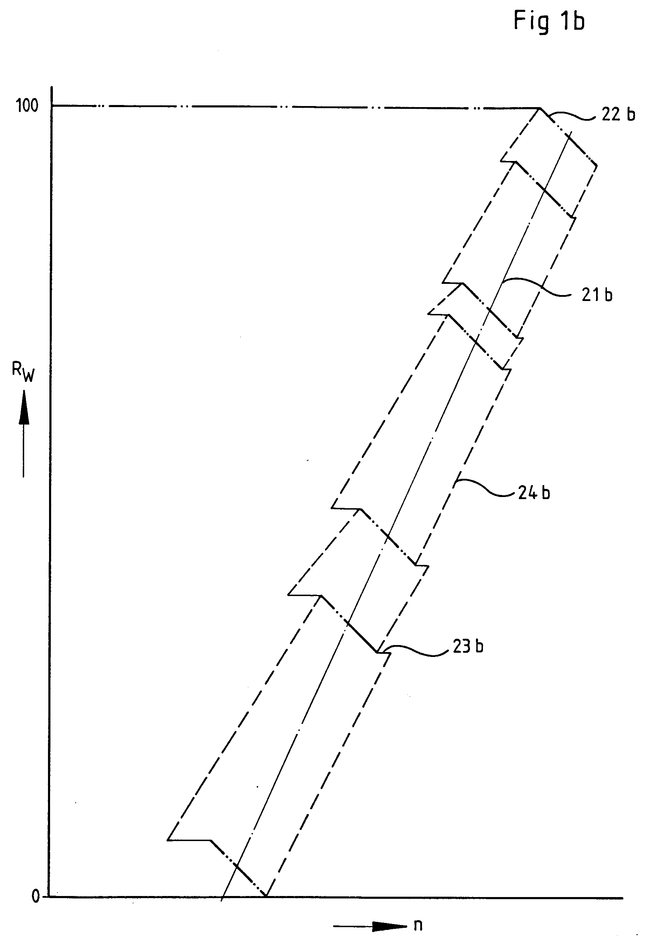

Nach der Sprungphase 24a wird beispielsweise in der Regelphase 22a geregelt, die in Fig. 1 unterhalb der obersten Regelphase liegt. Ebenso kann der Sprung jedoch bis zu einer der nächsten Regelphasen reichen. Vergrößert sich die Last um einen Betrag, der größer als der durch die Regelphase 22a abgedeckte Betrag ist, so findet ein Sprung 41 nach oben statt. Dieses Regelverhalten findet selbstverständlich nicht nur im Vollastbereich statt, sondern erstreckt sich auf den gesamten Regelbereich. Dies ist in der Fig. 1 durch beispielhaft angegebene Regelbereiche 22a und die dazugehörigen Sprungphasen dargestellt. In Fig. 1a haben auch die Sprungphasen 24a noch einen positiven P-Grad, wodurch sich auch ein positiver mittlerer Gesamt-P-Grad 21a ergibt.

In Fig. 1b sind entsprechende Zeichnungselemente mit der gleichen Nummer und dem Zusatz b versehen. Die Sprungphasen 24b weisen hier einen stark negativen P-Grad auf, so daß sich auch ein negativer mittlerer Gesamt-P-Grad 21b ergibt.

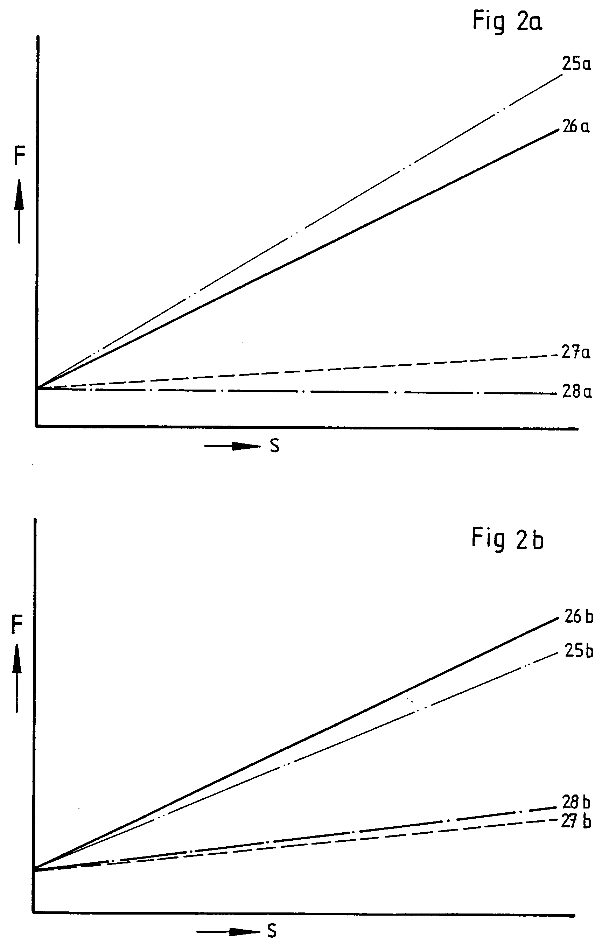

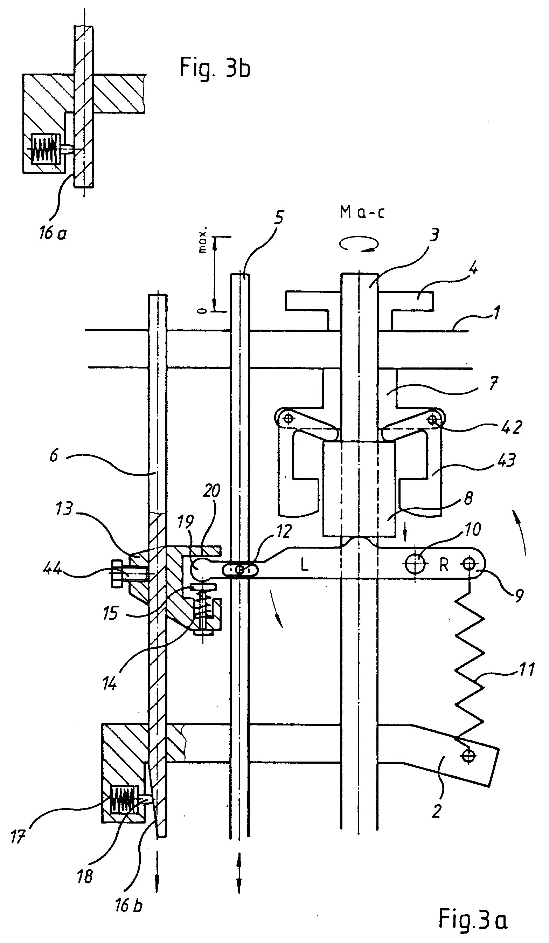

In Fig. 2 sind die unterschiedlichen Kennlinien der Widerstände, wie sie in dem Ausführungsbeispiel nach Fig. 3 benutzt werden, dargestellt.

In Fig. 2a wird dabei von einem positiven mittleren Gesamt-P-Grad, in Fig. 2b von einem negativen mittleren Gesamt-P-Grad ausgegangen. Die Linie 25 a,b zeigt den Kraftverlauf an der Feder 11 , gemessen über den Weg des Anlenkpunktes der Feder 11 am Reglerhebel 9, den dieser während des Regelvorganges beschreibt. Linie 26 a,b zeigt den Kraftverlauf, den die Fliehgewichte 41 bei einer Bewegung um die Anlenkpunkte 42 ausüben. Der Kraftverlauf ist auf konstante Drehzahl bezogen.

Die Linie 27 a,b stellt den Kraftverlauf dar, den die Feder 14 auf den Reglerhebel a ausübt. Linie 28 bezeichnet die Kraft, die von dem Stift 18 gemessen über den Regelstangenweg auf die Reibfläche 16 wirkt. Bei positivem P-Grad steigt die Kraft der Feder 11 starker an als die an den Fliehgewichten gemessene Kraft. Soll ein negativer P-Grad erreicht werden, muß der Kraftanstieg der Feder 11 unterhalb des an den Fliehgewichten gemessenen Anstiegs liegen, jedoch muß die Summe der Kraft der Feder 11 und der Kraft der Feder 14 wiederum darüber liegen.

Bei einer Regleranordnung nach Fig. 3 ist eine mit dem Motor über das Zahnrad 4 verbundene Welle 3 in einem Rahmen 1,2 gelagert. Drehfest mit der Welle verbunden ist ein Fliehgewichtsträger 7, mit dem Fliehgewicht 43 über das Gelenk 42 schwenkbar verbunden ist. Die Stellung des Fliehgewichts 41 wird über eine Schiebehülse 8 auf den Reglerhebel 9 übertragen. Dieser ist im Punkt 10 schwenkbar gelagert.

Die einerseits mit dem Lagerrahmen 2 verbundene Feder 11 greift mit ihrem anderen Ende am kürzeren Arm des Reglerhebels 9 an. Der Drehpunkt 10 des Reglerhebels befindet sich zwischen dem Anlenkpunkt der Feder 11 und dem Angriffspunkt der Schiebehülse 8. Mit seinem längeren Arm ist der Reglerhebel 9 über den Mitnahmestift 12 und ein Langloch mit der Fördermengenregelstange 5 verbunden. Über eine Schwenkung des Hebels 9 um den Punkt 10 läßt sich folglich die Fördermengenregelstange 5 parallel zur Welle 3 verschieben. Weiterhin ist der Reglerhebel 9 an seinem längeren Arm mit einem Mitnehmer 19 versehen, der mit einem Funktionsteil 13 zusammenwirkt, welches fest mit einer schiebbaren Stange 6 verbunden ist. Das Funktionsteil 13 weist eine feste Anschlagfläche 20 auf und nimmt auf der gegenüberliegenden Seite den Stift 15 auf, der sich über die Feder 14 an dem Funktionsteil 13 abstützt. Zu Justierungszwecken kann das Funktionsteil 13 mit einer Klemmschraube 44 versehen sein, mit der es an der Stange 6 festlegbar ist.

Der Lagerrahmen 2 dient auch als Aufnahme des Reibstiftes 18, der sich über die Feder 17 am Rahmen 2 abstützt und auf die Gleitfläche 16 der Stange 6 drückt.

Verringert sich nun bei dem nicht dargestellten Motor die anliegende Last, so erhöht sich die Drehzahl der Welle 3. Die Fliehgewichte 41 drängen mit ihrer Masse nach außen und schieben dadurch die Hülse 8 gegen den Reglerhebel 9. Die Kräfte der Feder 11 und der Feder 14 sind dieser Bewegung entgegengerichtet.

Wird die von den Fliehgewichten ausgehende Kraft größer als die Summe der Kräfte der beiden Federn, verschiebt sich die Regelstange 5 in eine Richtung, die eine Drosselung der Einspritzmenge bewirkt. Bei kleinen Laständerungen stellt sich hierdurch ein Kräftegleichgewicht ein, so daß die Motordrehzahl praktisch konstant bleibt. Ist der Lastabfall jedoch sehr groß, so wird eine große Schwenkung des Reglerhebels 9 bewirkt. Dabei drückt der Mitnehmer 19 die Feder 14 ganz zusammen und wirkt nun direkt gegen das Funktionsteil 13. In diesem Zustand kann sich die Kraft, mit der der Mitnehmer 19 gegen das Funktionsteil 13 wirkt, noch um einen gewissen Betrag erhöhen, ohne daß daraus eine weitere Bewegung der Reglerstange 5 und damit eine Drosselung der Einspritzmenge resultiert. Erhöht sich die Kraft jedoch weiter, so wird die Haftreibung zwischen dem Reibstift 18 und der Gleitfläche 16a/b überwunden, und die Stange 6 wird zusammen mit der Reglerstange 5 um einen gewissen Betrag verschoben. Dies ist mit der in Fig. 1 beschriebenen Sprungphase 24a/b gleichzusetzen. Für diese Funktion ist es gleichbedeutend, ob die Gleitfläche als gerade Fläche 16a wie in Fig. 3b oder als Schrägfläche 16b wie in Fig. 3a ausgebildet ist. Die Schrägfläche 16b hat lediglich die Funktion, daß bei einem plötzlichen Lastanstieg die Reglerstange 5 sehr schnell in ihre Öffnungsposition bewegt wird, da die gleichgerichtete Bewegung der Stange 6 durch den Druck des Stiftes 18 auf die Schrägfläche 16b kaum behindert wird. Außerdem wird dadurch bei niedriger Last ein stabileres Regelverhalten erreicht.

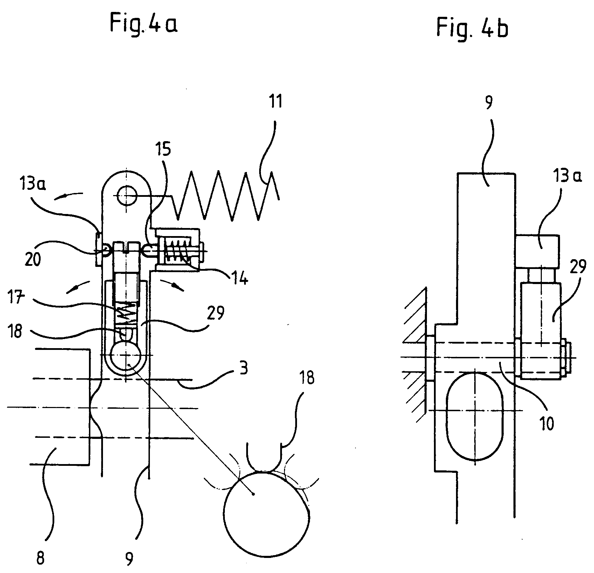

Das Ausführungsbeispiel nach Fig. 4 zeigt eine Anordnung, wie sie bei beengten Platzverhältnissen beim Einbau in Verteilereinspritzpumpen günstig wäre. Hier wird bei einem Verschieben der Hülse 8 wiederum der Reglerhebel 9 um den Drehzapfen 10 geschwenkt. Hier ist das Funktionsteil 13a, das die Anschlagfläche 20, den Stift 15 und die Feder 14 enthält, fest mit dem Reglerhebel 9 verbunden. Der Stift 15 drückt bei einer Bewegung des Reglerhebels 9 entgegen dem Uhrzeigersinn auf einen weiteren Schwenkhebel 29, der ebenfalls drehbar um die Achse 10 gelagert ist. Dieser Hebel 29 ist allerdings nicht frei drehbar, sondern wird durch den Reibstift 18, der durch die Feder 17 auf die Achse 10 gepreßt wird, gebremst.

Wenn sich nun der Reglerhebel 9 entgegen dem Uhrzeigersinn bewegt, wird der Hebel 29 so lange nicht mitbewegt, bis die Feder 14 zusammengedrückt ist. Erst dann wird analog zu dem Ausführungsbeispiel in Fig. 3 die Haftreibung zwischen dem Stift 18 und der Drehachse 10 überwunden, und die Sprungphase setzt ein. Wiederum in Analogie zu Fig. 3a kann die Drehachse im Bereich der Berührungszone zu Stift 18 unrund ausgebildet sein, so daß sich unterschiedliche Reibwerte ergeben. Die Reglerstange 5 ist in gleicher Weise wie in Fig. 3 angebracht und aus diesem Grunde hier nicht dargestellt.

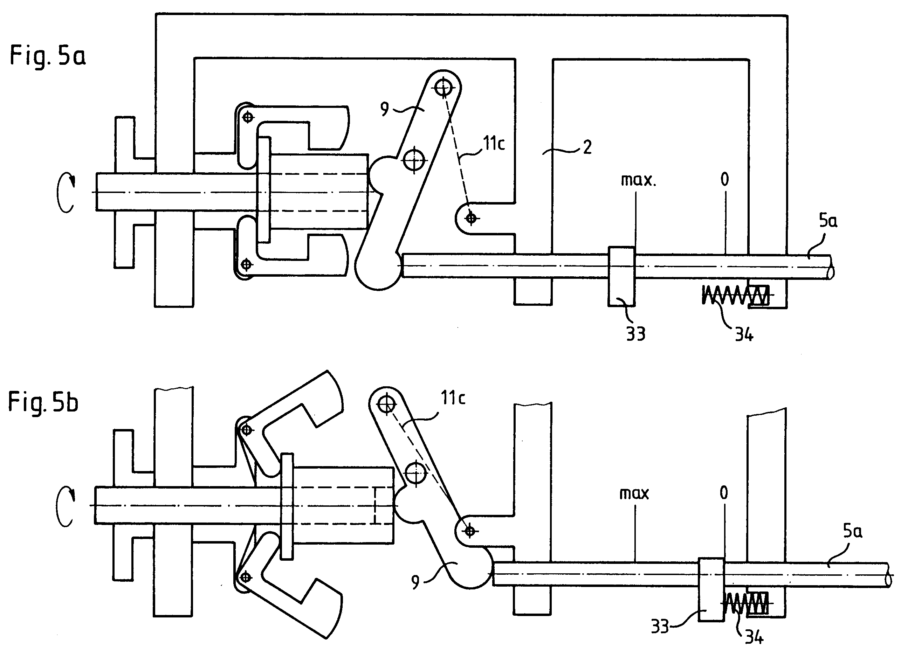

Fig. 5 beschreibt eine Ausführungsform, die beispielsweise zur Regelung eines Kompressormotors eingesetzt werden kann. Hier gibt es nur zwei Lastzustände, nämlich, daß keine Last anliegt und der Motor mit möglichst niedriger Leerlaufdrehzahl betrieben werden soll, oder daß der Motor in einem hohen Lastbereich läuft und die Drehzahl dementsprechend erhöht ist. Die Feder 11c ist hier so am Lagerrahmen 2 befestigt, daß der Kraftanstieg mit fortschreitender Bewegung des Reglerhebels 9 entgegen dem Uhrzeigersinn immer geringer wird.

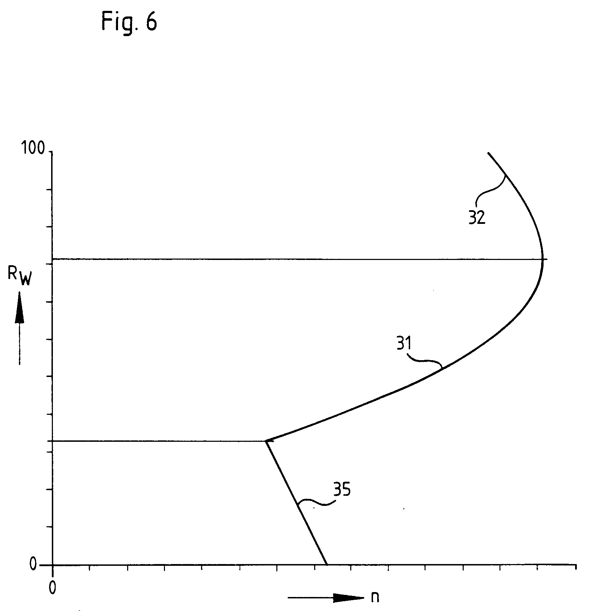

Geht man nun vom Lastbereich 32 (siehe Fig. 6) aus, so wird dort in herkömmlicher Weise mit positivem P-Grad sehr stabil geregelt. Fällt nun die Last über einen bestimmten Punkt ab und die Drehzahl erhöht sich dadurch, so wird ein Punkt erreicht, an dem die Kraft der Feder 11 gegenüber der Kraft der Fliehgewichte so stark abnimmt, daß der Reglerhebel eine sprungartige Bewegung macht und die Reglerstange 5 in ihre Drosselstellung bewegt. Diese Sprungphase ist in Fig. 6 durch die Linie 31 dargestellt. An der Reglerstange 5 ist ein Anschlag 33 befestigt, der in der Reglerstangenposition, die dem Einspritzvolumen bei Leerlauf entspricht, auf eine rahmenfeste Feder 34 trifft. Dadurch wird den Fliehgewichten eine zusätzliche Kraft entgegengesetzt, die sich zu der Kraft der Feder 11c addiert. Das bedeutet, daß in diesem Bereich, dem Leerlaufbereich wiederum stabil, mit positivem P-Grad geregelt wird. Dies ist in Fig. 6 durch die Linie 35 verdeutlicht.

Bei diesem Ausführungsbeispiel gibt es folglich nur zwei Regelbereiche mit positivem P-Grad 32, 35 und nur eine Sprungphase 31 mit negativem P-Grad. In diesem Spezialfall ist die Größe der Sprungphase fest und durch die Position des Anschlages 33 geregelt.

**Patentansprüche**

1. Verfahren zum Regeln der Drehzahl von Kraftmaschinen bei unterschiedlichen Lasten, dadurch gekennzeichnet, daß der Gesamtregelbereich in mindestens zwei Regelphasen mit positivem P-Grad 22a, 22b und mindestens eine dazwischenliegende Sprungphase 24a, 24b aufgeteilt ist, wobei der Absolutbetrag des P-Grades der Regelphasen immer größer als der Absolutbetrag des P-Grades der Sprungphase ist.

2. Verfahren nach Anspruch 1, dadurch gekennzeichnet, daß im Gesamtregelbereich mindestens eine Sprungphase mit negativem P-Grad auftritt.

3. Vorrichtung zur Durchführung des Verfahrens nach Anspruch 1, dadurch gekennzeichnet, daß die Kraft, die den Fliehgewichten eines Fliehkraftreglers entgegengesetzt ist, durch mindestens drei verschiedene Kraftquellen erzeugt wird und daß eine der Kraftquellen bistabiles Verhalten zeigt.

**4.** Vorrichtung nach Anspruch 3, dadurch gekennzeichnet, daß die bistabile Kraftquelle erst durch eine vorbestimmte Gegenkraft von einer hohen Haltekraft auf eine kleinere Haltekraft umgeschaltet wird.

**5.** Vorrichtung nach Anspruch 4, dadurch gekennzeichnet, daß die bistabile Kraftquelle über den Gesamtregelbereich nicht konstant ist.

**6.** Vorrichtung nach Anspruch 3, dadurch gekennzeichnet, daß zwei Kraftquellen durch eine Hauptregelfeder und eine Zusatzfeder gebildet werden und die bistabile Kraftquelle ein Reibwiderstand ist, der durch Haft- und Gleitreibung wirkt.

**7.** Vorrichtung nach Anspruch 6, dadurch gekennzeichnet, daß die bistabile Kraftquelle ein federbelasteter Stift ist, der auf eine Gleitfläche wirkt.

**8.** Vorrichtung nach Anspruch 5 und 6, dadurch gekennzeichnet, daß die bistabile Kraftquelle ein federbelasteter Stift ist, der auf eine schräge Gleitfläche wirkt.

**9.** Vorrichtung zur Durchführung des Verfahrens nach Anspruch 2, dadurch gekennzeichnet, daß die Kraft, die den Fliehgewichten eines Fliehkraftreglers entgegengesetzt ist, nur im Leerlaufbereich durch zwei verschiedene Kraftquellen erzeugt wird und daß die von der ständig wirkenden Quelle erzeugte Kraft bei abnehmender Einspritzmenge nur im Lastbereich stärker ansteigt als die von den Fliehgewichten ausgehende Kraft.

**10.** Vorrichtung nach Anspruch 9, dadurch gekennzeichnet, daß die ständig wirkende Kraftquelle einen zweiarmigen Hebel aufweist, dessen einer Arm von den Fliehgewichten beaufschlagt wird und auf dessen anderen Arm in spitzem Winkel eine Feder wirkt.

Fig 1a

EP 0 507 201 A2

Fig 1b

Fig 2a

Fig 2b

Fig. 3b

16 a

Fig. 3 a

M a-c

max.

0

5

3

4

1

7

42

43

6

8

13

19

20

12

10

44

L

R

9

15

11

14

2

17

18

16 b

Fig. 4 a

Fig. 4 b

Fig. 5a

9

11c

2

max.

0

5a

33

34

Fig. 5b

11c

9

max

0

5a

33

34

EP 0 507 201 A2

Fig. 6